# EUROPEAN PATENT SPECIFICATION

(11) **EP 3 137 273 B1**
(45) Date of publication and mention of the grant of the patent: **02.06.2021**
(21) Application number: 15726713.9
(22) Date of filing: 28.04.2015
(51) Int. Cl.: B29D 30/06, C08G 77/16, C08L 83/06, C09D 183/04

(54) **PROCESS FOR PRODUCING TYRES FOR VEHICLE WHEELS**
VERFAHREN ZUR HERSTELLUNG VON REIFEN FÜR FAHRZEUGRÄDER
PROCÉDÉ DE PRODUCTION DE PNEUS POUR ROUES DE VÉHICULE

(30) Priority: 30.04.2014 IT MI20140798
(43) Date of publication of application: 08.03.2017
(73) Proprietor: Pirelli Tyre S.p.A., 20126 Milano (IT)
(72) Inventor: BERENGUER, Albert, I-20126 Milan (IT); CASTELLANI, Luca, I-20126 Milan (IT); MICELI, Riccardo, I-10036 Settimo Torinese (TO) (IT)
(74) Representative: PGA S.p.A.
(86) International application number: PCT/IB2015/053088
(87) International publication number: WO 2015/166411

(56) References cited:
- WO-A1-2005/012431
- US-A- 4 244 912
- US-A- 4 863 650
- US-A1- 2003 199 398
- US-A1- 2009 114 327

## Description

The present invention relates to a process for producing tyres for vehicle wheels.

### STATE OF THE ART

A tyre for vehicle wheels generally comprises a carcass structure comprising at least one carcass ply having respectively opposite terminal flaps engaged with respective annular anchoring structures, integrated in the zones normally identified with the name "beads".

The carcass structure is associated with a belt structure comprising one or more belt layers, situated in radial superimposition with respect to each other and with respect to the carcass structure, having textile or metallic reinforcement cords. In radially outer position with respect to the belt structure, a tread band is applied, it too comprising elastomeric material like other semifinished products forming the tyre.

Respective sidewalls are also applied in axially outer position on the lateral surfaces of the carcass structure, each extended form one of the edges of the tread band up to the respective annular anchoring structure.

In the tyre, the crown portion is identified as a tyre portion where the tread is arranged, axially comprised between the two edges thereof.

In the tyres of "tubeless" type, a air impermeable covering layer, normally termed "liner", covers the inner surfaces of the tyre.

Following the building of the green tyre, actuated by means of assembly/building of the respective components, a moulding and vulcanisation treatment is executed that is aimed to determine the structural stabilization of the tyre by means of cross-linking of the elastomeric compositions as well as, if required, to impart on the same tyre a desired tread pattern and possible graphic marks at the sidewalls.

For such purpose, according to a type of method for moulding and vulcanising a new green tyre termed "at set pressure", the green tyre is introduced into a mould and pressed against the inner walls of said mould by means of an expandable chamber, also termed vulcanisation chamber.

The expandable chamber is arranged within the tyre itself and has at least one circumferential edge carrying appendages of anchorage to respective parts of the mould.

The expansion of the expandable chamber is obtained by means of introduction of a pressurized hot fluid (gas or steam) within the same, so as to bring said expandable chamber in contact with the inner surface of the tyre and compress the latter against the walls of the moulding cavity, with simultaneous transmission of the heat required for cross-linking.

Upon completed vulcanisation, the expandable chamber is depressurized and the mould is open, in order to allow the removal of the tyre and arrange the mould at a new vulcanisation cycle.

A mutual movement of the external contact surface of the expandable chamber and of the radially inner surface of the liner of the green tyre can frequently be verified both during the chamber expansion step and during the deflation and removal of the chamber from the tyre after the tyre has been moulded and vulcanised.

During the latter operation, the surface of the expandable chamber tends to remain attached to the radially inner surface of the liner. The separation of the two surfaces actuated at end of the vulcanisation cycle can cause local damage of the chamber and involve flaws in the tyre. A reduction of the duration of the expandable chamber and a reduced productivity of tyres may follow.

The patent US 7,896,633 describes an expandable chamber for cross-linking rubber products comprising an inner layer and an outer layer, such outer layer comprising a silicone rubber.

The patent US 4,359,340 describes a lubricant composition for use in the covering of vulcanisation chambers comprising polydimethylsiloxane and silane.

The patent US 8,101,279 describes lubricant emulsions for use in covering vulcanisation chambers and/or green tyres comprising polysiloxane but that, unlike those described in US 4,359,340, do not emit hydrogen; such emulsions perform lubricant functions or they function as primer and thus facilitate the bonding with the surface of the compound of the chamber, depending on the greater or lesser quantity of non-reactive polysiloxane oil contained therein.

The patent applications US2009/114327, EP 0399526 A2, EP 0160537 A2 and the patents US 4 533 305 and US 4 431 452 describe a process for forming a tyre comprising reapplying a lubricant composition to the expandable vulcanisation chamber after the first vulcanisation cycle, in order to restore the lubricant properties of the composition that have deteriorated after the first vulcanisation cycle.

The patent US 4, 863, 650 describes a process for forming a tyre comprising covering a chamber with a multilayer release film. Each layer of release film used in such process is produced by means of covering the external surface of the chamber with a solution comprising a polysiloxane mixture whose solvent is a mixture of a chlorofluorocarbon (Frigen 113) and hydrocarbons.

### SUMMARY OF THE INVENTION

Current safety laws do not allow using inflammable and/or toxic solvents.

In addition, the ecological policies actuated by the Applicant in its processes have stimulated the search for production solutions that tend for example to extend the effectiveness of the equipment and/or limit the material waste.

The Applicant has observed that the lubrication of the expandable vulcanisation chamber and/or of the green tyres, if excessively frequent, can be polluting, and if overly reduced it can lead to a reduction of the duration of the expandable chamber and/or the presence of flaws in the produced tyres.

The Applicant has addressed the problem of how to prevent or at least limit the presence of inflammable and/or toxic substances in the production cycle, such as hydrocarbons or halocarbons, and at the same time increase the effectiveness of the expandable vulcanisation chamber in terms of number of tyres produced before the substitution of the expandable chamber, maintaining a high quality of the produced tyres and simultaneously reducing the presence of polluting substances in the production cycle.

The Applicant has found that by providing a multilayer treatment on the expandable vulcanisation chamber by means of the use of a polysiloxane composition in cyclic polysiloxane as solvent, it is possible to provide a process in accordance with the current safety laws, simultaneously maintaining or improving the essential properties of the composition itself, such as:
- the viscosity, suitably low so to be able to uniformly apply the composition and give films with low thicknesses and
- the uniformity, due to the optimal capacity of solubilising the polysiloxane molecules.

The Applicant has thus found that it is possible to provide a protective multilayer treatment process for the chamber in accordance with the current safety standards, simultaneously ensuring high performance of the chamber itself.

The present invention therefore refers, according to a first aspect, to a process for producing tyres for vehicle wheels comprising:
a) forming a green tyre on a forming drum,
b) arranging an expandable vulcanisation chamber c) shaping, moulding and vulcanising the green tyre,
wherein arranging an expandable vulcanisation chamber comprises:
b1) covering the external surface of said expandable vulcanisation chamber with a substantially cross-linkable polysiloxane composition A comprising:
   A1) at least one reactive polysiloxane oil having OH groups,
   A2) at least one cross-linking agent comprising at least two functional groups capable of reacting with the reactive polysiloxane oil A1) and
   A6) at least one cyclic polysiloxane as solvent,
b2) cross-linking said substantially cross-linkable polysiloxane composition A on the expandable chamber;
b3) repeating at least once the aforesaid operations b1) and b2), consecutively, before starting the vulcanisation of the first green tyre.

The Applicant has found that by operating in accordance with the process of the present invention, the separation between the expandable chamber and the radially inner surface of the liner of the tyre is facilitated, there is an extension of the lifetime of the chamber and the quality of the tyres produced is improved, in particular with regard to the liner.

In particular, the Applicant has observed that with the process according to the present invention, sliding and separation of expandable chamber and tyre during and at the end of the vulcanisation process are facilitated, therefore the expandable chamber is less subject to twisting and cracking and can advantageously be used for a greater number of production cycles. The two or more treatments of covering and cross-linking with the substantially cross-linkable polysiloxane composition A on the expandable chamber, in addition to supplying the separation/sliding properties during tyre vulcanisation, create a multilayer film that is rather thick and substantially uniformly distributed on the surface of the expandable chamber. The repeated treatment improves the degree of cross-linking of the polysiloxane composition which therefore tends to remain on the chamber camera for the entire operative cycle of the chamber itself. The two or more treatments and corresponding cross-linking of the polysiloxane composition would also seem to reduce the deformability of the expandable chamber and would ensure an improved covering of the expandable chamber also in the zone at the beads of the tyre. According to the Applicant, such zones are particularly critical since in the zone of the chamber in contact with the bead of the tyre, stiffening and abrasion phenomena were encountered due to oxidative phenomena and to the sulfur released by the bead filler compound. Due to the process according to the invention, such phenomena of stiffening and abrasion of the expandable chamber are considerably reduced or eliminated.

According to one embodiment the process for producing tyres for vehicle wheels comprises
c1) selecting at least one green tyre every n green tyres, where n is an integer less than 60;
c2) covering predefined portions of the radially inner surface of the liner of said at least one selected green tyre with a second substantially non-cross-linkable polysiloxane composition B comprising B1) at least one non-reactive polysiloxane oil.

Preferably the covering of the radially inner surface of the liner of at least one green tyre with a non-cross-linkable polysiloxane composition B is carried out on one green tyre every n tyres to be subjected to moulding and vulcanisation with n integer preferably comprised between 5 and 50.

By reducing the frequency of lubrication treatment of the green tyres and the extension of the covering surfaces, the presence of pollutants in the tyre production is also advantageously reduced.

Preferably the covering of the radially inner surface of the liner of at least one green tyre with a non-cross-linkable polysiloxane composition B is carried out in the zones placed at the beads, more preferably also in the zones placed at the sidewalls, still more preferably also in the zones placed at the edges of the tyre and/or beyond the edges at part of the crown portion of the tyre.

Preferably c2), covering predefined portions of the radially inner surface of the liner of said at least one green tyre, is carried out in a manner so as to leave uncovered at least 80%, more preferably 100% of the radially inner surface of the liner at the crown portion of the green tyre.

Preferably c2) is carried out with a frequency not less than 1 green tyre every 50 (n=50), more preferably it occurs with a frequency not less than 1 green tyre every 24 (n=24), still more preferably with a frequency not less than 1 green tyre every 12 (n=12), still more preferably with a frequency not less than 1 green tyre every 6 (n=6).

The covering of the tyre can be applied to all the green tyres, in this case the covering is considered with a frequency of 1 green tyre every tyre (n=1).

Preferably between 1 g/m² and 15 g/m², more preferably between 4 g/m² and 12 g/m² of second substantially non-cross-linkable polysiloxane composition B are applied per single green tyre, said composition also comprising the solvent in a quantity equal to at least 50% by weight, preferably to at least 60% by weight, more preferably to at least 75% by weight with respect to the total weight of the composition itself.

In accordance with a second aspect, the invention relates to a process for treating an expandable chamber for tyre vulcanisation and moulding apparatuses, comprising forming, on said chamber, a multilayer film by means of a substantially cross-linkable polysiloxane composition A.

Preferably said process comprises:
b1) covering the external surface of said expandable vulcanisation chamber with a substantially cross-linkable polysiloxane composition A comprising:
   A1) at least one reactive polysiloxane oil having OH groups,
   A2) at least one cross-linking agent comprising at least two functional groups capable of reacting with the reactive polysiloxane oil A1) e
   A6) at least one cyclic polysiloxane as solvent,
b2) cross-linking said substantially cross-linkable polysiloxane composition A on the expandable chamber;
b3) repeating at least once the aforesaid operations b1) and b2), consecutively, before starting the vulcanisation of the first green tyre.

With the expression "reactive polysiloxane oil" it is intended a silicone oil or a polysiloxane which in use conditions chemically reacts with at least one other constituent of the composition. The commonly used term "silicone", or the more correct term "polysiloxane", identify inorganic polymers based on a silicone-oxygen chain and organic functional groups R bonded to the silicon atoms.

With the expression "non-reactive polysiloxane oil" it is intended a silicone oil or a polysiloxane which in preparation and use conditions substantially does not chemically react with the constituents of the substantially cross-linkable polysiloxane composition A.

With the term "solvent" it is intended a component capable for example of dissolving, and/or dispersing, and/or emulsifying, and/or diluting the components of the substantially cross-linkable polysiloxane composition A.

With the expression "cyclic polysiloxane" it is intended a class of chemical compounds in which the functional group -SiO- that is repeated is within a cycle. With the expression "volatile phase" it is intended a phase mainly constituted by solvent, and possibly comprising other volatile components such as reactive and non-reactive polysiloxanes, or degradation and/or cross-linking products.

With the expression "multilayer film comprising substantially cross-linked polysiloxane", referred to the expandable chamber of the present invention, it is intended a covering obtainable following the application and cross-linking of a substantially cross-linkable polysiloxane composition A executed at least two times. The present invention, in at least one of the aforesaid aspects, can have at least one of the following preferred characteristics, taken separately or in combination with the others.

The substantially cross-linkable polysiloxane composition A can be applied to the external surface of the expandable chamber before it is mounted on the vulcaniser or even after said chamber has been mounted on the vulcaniser, before or during the preheating step preceding the vulcanisation of a first tyre.

The substantially cross-linkable polysiloxane composition A can be applied by means of a sponge, by spraying or spreading or by means of other suitable systems. Preferably the operations b1) and b2) are carried out at least three times. Preferably after b1), the process comprises b11) removing at least one volatile phase of said substantially cross-linkable polysiloxane composition A. More preferably, the expandable chamber is preferably left to dry at ambient temperature. Preferably the covering of the external surface of said expandable vulcanisation chamber is carried out on 100% of the external surface of the chamber.

After each application of the substantially cross-linkable polysiloxane composition A on the external surface of the expandable chamber, the cross-linking of the substantially cross-linkable polysiloxane composition A can be carried out via heating or at ambient temperature possibly in the presence of a cross-linking catalyst. Preferably the cross-linking occurs via heating at a temperature of at least 120°C, preferably at a temperature not greater than 180°C; more preferably the cross-linking occurs via heating at a temperature comprised between 150°C and 170°C for a time comprised between 30 minutes and 2 hours; still more preferably at a temperature comprised between 155°C and 165°C for a time comprised between 30 minutes and 90 minutes.

Preferably at the end of the cross-linking the expandable chamber is cooled, preferably at ambient temperature (at about 20-25°C).

Preferably, the expandable chamber is cooled for a time that can vary between 1 hour and 24 hours.

Preferably for every single layer of the multilayer film of the expandable chamber, at least 10 g/m2, preferably not more than 50 g/m2 of substantially cross-linkable polysiloxane composition A are applied, still more preferably between about 14 g/m2 and about 42 g/m2 of substantially cross-linkable polysiloxane composition A are applied, said composition also comprising the solvent in a quantity equal to at least 50% by weight, preferably to at least 60% by weight, more preferably to at least 75% by weight with respect to the total weight of the composition itself.

Preferably for every single covering of the expandable chamber, the application of said substantially cross-linkable polysiloxane composition A and/or the removal of said at least one volatile phase of said polysiloxane composition A are carried out in a manner such that after cross-linking, the remaining thickness of every single layer of the multilayer film of the expandable chamber is at least 3 micrometres, preferably less than 14 micrometres.

Preferably the application of said substantially cross-linkable polysiloxane composition A and/or the removal of said at least one volatile phase of said polysiloxane composition A are carried out in a manner such that after cross-linking at the end of the treatment of the expandable vulcanisation chamber, the total remaining thickness of the multilayer film of the expandable chamber is greater than 6 micrometres, preferably less than 50 micrometres, still more preferably comprised between 9 micrometres and 40 micrometres.

The Applicant deems that thicknesses and/or quantities of cross-linked composition that are too low may not be sufficient for isolating the surface of the chamber and for increasing the number of vulcanisation cycles that can be carried out.

The Applicant also deems that the deposition of a high thickness and/or a high quantity of substantially cross-linkable polysiloxane composition A does not allow a correct cross-linking through the entire thickness of the layer, with consequent risk of delamination and/or separation of the multilayer film.

Preferably the multilayer film of the expandable vulcanisation chamber comprises at least two, preferably at least three, layers of cross-linked polysiloxane composition radially superimposed on each other and on the expandable chamber. Preferably the multilayer film of the expandable vulcanisation chamber is obtained by subjecting the chamber to at least two, preferably at least three, consecutive treatments of covering with the substantially cross-linkable polysiloxane composition A and cross-linking of the same on the chamber before said chamber is mounted in the vulcanisation apparatus or before the start of a vulcanisation cycle.

Preferably the substantially cross-linkable polysiloxane composition A comprises: A3) at least one non-reactive polysiloxane oil.

Preferably, the weight ratio between the non-reactive polysiloxane oil A3) and the reactive polysiloxane oil A1) is less than 1, preferably it is comprised between 0.01 and 0.7.

Preferably said substantially cross-linkable polysiloxane composition A comprises: A4) a cross-linking catalyst.

Preferably said substantially cross-linkable polysiloxane composition A comprises: A5) at least one polysiloxane resin having condensable hydroxyl groups and siloxylic units.

Preferably, in the substantially cross-linkable polysiloxane composition A, the organic substituents bonded to the silicon atom of the reactive polysiloxane oil A1) are selected independently from among linear or branched C₁-C₆ alkyl, C₃-C₈ cycloalkyl, linear or branched C₂-C₈ alkenyl, C₅-C₈ cycloalkenyl, optionally substituted by hydroxyl, and/or amino optionally substituted with alkyl, alkenyl or cycloalkyl, and/or halogen, and/or cyano .

In the substantially cross-linkable polysiloxane composition A, preferably the organic substituents bonded to the silicon atom of the reactive polysiloxane oil A1) are independently linear or branched C₁-C₆ alkyl.

In the substantially cross-linkable polysiloxane composition A, preferably the molecular weight of the reactive polysiloxane oil A1) is greater than 590 Dalton, more preferably it is greater than 1000 Dalton.

In the substantially cross-linkable polysiloxane composition A, the cross-linking agent A2) is preferably an organotrialkoxysilane, an organotriacyloxysilane, an organotrioxymosilane or a tetraalkyl silicate; more preferably such cross-linking agent A2) is methyltrimethoxysilane, methyltriethoxysilane, ethyltriethoxysilane or vinyltrimethoxysilane, still more preferably it is methyltriethoxysilane.

The substantially cross-linkable polysiloxane composition A can comprise a second cross-linking agent A2) having functional groups Si-H, for example methylhydrogen-silane, dimethyl-hydrogen-silane and polymethyl-hydrogen-silane. Preferably the substantially cross-linkable polysiloxane composition A comprises: at least two different cross-linking agents A2) comprising at least two functional groups capable of reacting with the reactive polysiloxane oil A1); still more preferably such cross-linking different agents A2) are methyltriethoxysilane and polymethyl-hydrogen-silane.

Preferably, in the substantially cross-linkable polysiloxane composition A, the organic substituents bonded to the silicon atom of the non-reactive polysiloxane oil A3) are selected independently from among linear or branched C₁-C₆ alkyl, C₃-C₈ cycloalkyl, linear or branched C₂-C₈ alkenyl, C₆-C₁₀ aryl, C₆-C₁₅ alkylarylene and C₆-C₁₅ arylalkylene, more preferably from among alkyl C₁-C₆, C₆-C₁₅ alkylarylene and C₆-C₁₅ arylalkylene.

In the substantially cross-linkable polysiloxane composition A, preferably the molecular weight of the non-reactive polysiloxane oil A3) is greater than 590 Dalton, preferably it is greater than 1000 Dalton.

Preferably the cross-linking catalyst A4) is an organometallic compound, more preferably an organometallic compound of titanium, zirconium or tin, more preferably of tin (Sn), still more preferably such catalyst is octyl tin diacetate, octyl tin dihexanoate or octyl tin dilaurate.

Preferably the organic substituents of the resin A5) are independently linear or branched C₁-C₆ alkyl, linear or branched C₂-C₈ alkenyl, C₃-C₈ cycloalkyl and C₅-C₈ cycloalkenyl, optionally substituted with a group selected from among -OR', -O-COR', an amino group, an amidic group, an epoxy group and a ureido group, where R' is selected from among non-substituted linear or branched C₁-C₆ alkyl, linear or branched C₂-C₈ alkenyl, C₃-C₈ cycloalkyl and C₅-C₈ cycloalkenyl.

The substantially cross-linkable polysiloxane composition A comprises A6) at least one cyclic polysiloxane as solvent.

Preferably said cyclic polysiloxane has the following formula (I): 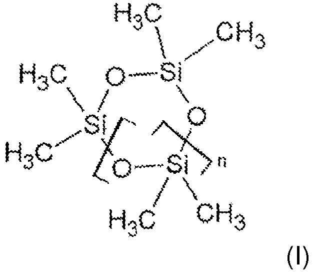 where n is an integer comprised between 1 and 15; preferably n is comprised between 1 and 11.

More preferably the cyclic polysiloxane is selected from among octamethylcyclotetrasiloxane (D4; n=2), decamethylcyclopentasiloxane (D5; n=3), dodecamethylcyclohexasiloxane (D6; n=4), tetradecamethylcycloheptasiloxane (D7; n=5), hexadecamethylcyclooctasiloxane (D8; n=6) and mixtures thereof.

Still more preferably the cyclic polysiloxane is selected from among decamethylcyclopentasiloxane (D5; n=3), dodecamethylcyclohexasiloxane (D6; n=4), tetradecamethylcycloheptasiloxane (D7; n=5) and mixtures thereof.

Preferably the molecular weight of the solvent A6) is less than 1000 Dalton, more preferably less than 590 Dalton.

The volatile phase of the substantially cross-linkable polysiloxane composition A can represent a percentage by weight with respect to the total of at least 50%, preferably at least 60%, more preferably at least 70%, still more preferably at least 75%.

Preferably the at least one cyclic polysiloxane is present in a quantity equal to at least 95%, more preferably at least 99% with respect to the overall weight of the volatile phase.

Preferably the substantially cross-linkable polysiloxane composition does not comprise (halo)hydrocarbons in a quantity greater than 10%, more preferably 5%, more preferably 2% with respect to the overall weight of the composition itself. Preferably the substantially cross-linkable polysiloxane composition does not comprise (halo)hydrocarbons or other toxic solvents.

Preferably the one or more cyclic polysiloxanes are the only solvents of the substantially cross-linkable polysiloxane composition.

Preferably the substantially cross-linkable polysiloxane composition A does not contain non-reactive polysiloxane oil A3) or it contains a quantity thereof that is less than 5%, more preferably less than 2% by weight with respect to the total. Optionally, in step b1), polysiloxane compositions can be used such as the primer compositions described in US 8,101,279 as first covering of the expandable chamber in order to ensure an improved adhesion to the surface of the elastomeric material of the expandable chamber, in addition to the treatment steps of the process of the present invention.

The substantially cross-linkable polysiloxane composition A preferably has a viscosity that is sufficiently low such that it can be applied on the surface of the expandable chamber in a uniform manner, by means of a sponge, spraying, spreading or other suitable systems. In order to do this, such composition contains components with low viscosity, or it is dispersed in a solvent, or an aqueous emulsion is achieved, preferably the aqueous emulsion contains about 75%. The volatile phase is preferably eliminated by means of thermal treatment in an oven. Preferably the substantially cross-linkable polysiloxane composition A has a viscosity comprised between 50 Centipoise (Cp) and 2000 Cp, more preferably comprised between 75 Cp and 1800 Cp at 21 °C.

The viscosity is intended to be measured by means of Brookfield LVT Spindle 2 at 60 RPM at 21 °C.

Preferably the substantially cross-linkable polysiloxane composition A has a solid residue (non-volatile phase determined by means of TGA up to 160°C) comprised between 15% and 45%, more preferably comprised between about 20% and 40%. The present invention also refers to an expandable chamber for vulcanisation apparatuses that can be prepared with the process of the present invention.

The present invention also refers to an expandable chamber for tyre vulcanisation and moulding apparatuses for vehicle wheels, having, on the external surface, a multilayer film comprising substantially cross-linked polysiloxane.

The present invention finally refers to a tyre vulcanisation and moulding apparatus, comprising an expandable chamber treated as described above.

Further characteristics and advantages will be clearer from the detailed description of a preferred but not exclusive embodiment, of an apparatus for moulding and vulcanising tyres for vehicle wheels, according to the present invention.

### DESCRIPTION OF THE DRAWINGS

Such description is set forth hereinbelow with reference to the enclosed drawings, provided only as a non-limiting example in which:
- figure 1 schematically shows, in diametric section, a vulcanisation mould in an initial step of a moulding and vulcanising process;
- figure 2 schematically shows, in radial half-section, a tyre for vehicle wheels. With reference to figure 1, reference number 1 overall indicates a vulcanisation mould belonging to a tyre building plant.

The vulcanisation and moulding process is executed by introducing the green tyre 100 within a moulding cavity 2 of the vulcanisation mould 1, said cavity 2 having a shape corresponding to the external shaping to be conferred to the tyre 100 once moulded and vulcanised.

The green tyre 100, once shut in the mould 1, is pressed against the containment walls that have suitable reliefs for determining the formation of a specific tread design.

Subsequently or at the same time as the pressing step, heat is administered to the green tyre 1 in a manner so as to determine the cross-linking of the elastomeric material constituting the tyre itself.

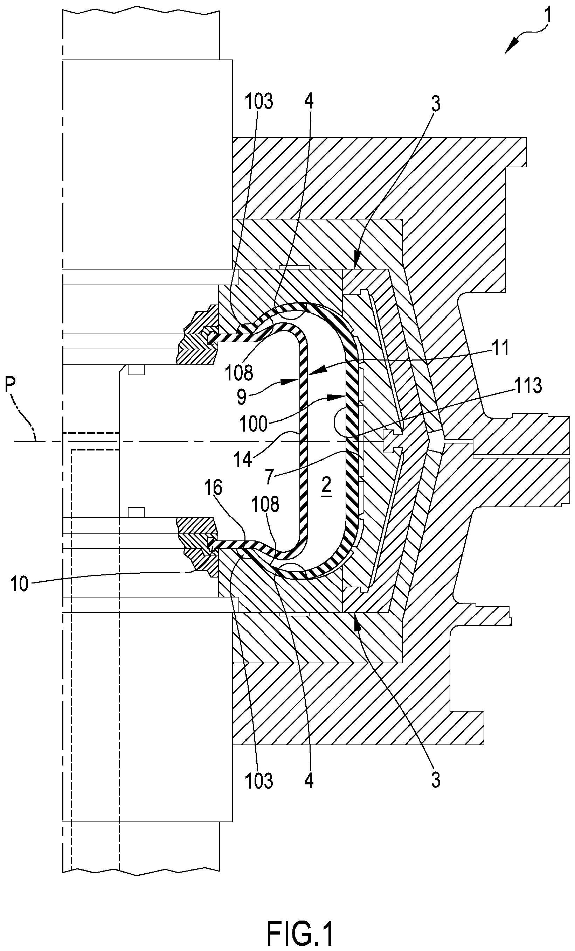

As is visible in figure 1, the mould 1 has a pair of axially opposite shells 3 that can be mutually coupled at an equatorial plane P. Each of the shells 3 comprises a work surface 4 arranged to operate on beads 103 and on sidewalls 108 of the green tyre 1.

The mutually adjacent shells 3 on the abovementioned equatorial plane P also define a circumferential surface 7 arranged to operate against the tread band of the green tyre 100 to be vulcanised.

The green tyre 100, once shut in the mould 1, is pressed against the containment walls due to an expandable vulcanisation chamber 9.

The expandable chamber for tyre vulcanisation and moulding apparatuses comprises at least one cross-linkable rubber selected from among natural or synthetic rubbers, for example isoprene rubbers. Preferably said expandable chambers comprise a compound with butyl rubber base. Butyl rubber is a copolymer mainly constituted by isobutylene with small quantities of diene monomers, with the purpose of providing sufficient unsaturation for allowing the butyl rubber to crosslink. Preferably, butyl rubber is selected from among isobutyl rubbers; preferably such isobutyl rubbers are selected from among isoolefin monomer homopolymers containing from 4 to 12 carbon atoms, or copolymers obtained by polymerizing a mixture comprising at least one isoolefin monomer containing from 4 to 12 carbon atoms and at least one conjugated diolefin monomer containing from 4 to 12 carbon atoms. Preferably said isoolefin monomer is selected from among compounds C₄-C₁₂, such as isobutylene, isobutene, 2-methyl-l-butene, 3-methyl-1-butene, 2-methyl-2-butene, methyl vinyl ether, indene, vinyltrimethylsilane, hexene, 4-methyl-l-pentene, or mixtures thereof. Isobutylene is preferred.

Preferably, said conjugated diolefin monomer is selected from among the compounds from C₄ to C₁₄, such as isoprene, 1,3-butadiene, 2,3-dimethyl-1,3-butadiene, myrcene, 6,6-dimethyl-fulvene, hexadiene, cyclopentadiene, piperylene, or mixtures thereof. Isoprene is preferred.

Other polymerizable monomer, such as styrene, styrene optionally substituted with C₁-C₄-alkyl or halogen groups, such as methylstyrene, dichlorostyrene, can be present in the above mentioned butyl rubbers.

More preferably, the butyl rubbers are selected from among halogenated and nitrilated butyl rubbers. Still more preferably the butyl rubbers are selected from among halogenated isobutylene and p-alkylstyrene copolymers. Preferably said halogenated isobutylene and p-alkylstyrene copolymers are selected from among copolymers of an olefin containing from 4 to 7 carbon atoms, such as isobutylene, and with a p-alkylstyrene such as for example p-methylstyrene.

Optionally, said butyl rubber base compound contains conventional additives, including fillers, peptizing agents, stearic acid, accelerators, vulcanising sulfur agents, resins for cross-linking, antiozonants, antioxidants, process oils, activators, initiators, plasticisers, waxes, prevulcanisation inhibitors, diluent oils and the like.

The expandable vulcanisation chamber 9, covered according to the process of the present invention, has substantially toroidal shape.

The expandable chamber 9 is subjected to a treatment comprising at least two, preferably at least three successive cycles for covering with the above-described substantially cross-linkable polysiloxane composition A and subsequent cross-linking of the same in a manner so as to obtain a multilayer film constituted by at least two, preferably at least three layers with cross-linked polysiloxane composition. The expandable vulcanization chamber 9 has two circumferential edges carrying respective anchoring appendages 10, sealingly engageable in the mould 1, for operatively associating the expandable chamber 9 with the same mould 1.

The anchorage appendages 10 are connected to the mould 1 at anchorage zones of the surfaces of the shells 3 that receive the beads of the green tyre 100.

A supply duct for vapour, or another operative fluid, obtained in the mould 1 flows inside the expandable chamber 9, so as to allow the expansion of the latter following the introduction of pressurised vapour, in order to compress the green tyre 100 against the containment walls of the mould 1.

Such compression preferably occurs in a manner such that the radially outer surface 11 of the expandable chamber 9 approaches and contacts the radially inner surface 113 of the liner of the green tyre 100, according to a specific approach sequence. Preferably, on the inner surface 14 of the expandable chamber 9, a first plurality of grooves 16 is obtained on at least one portion of said expandable chamber 9. Preferably said first plurality of grooves 16 is obtained according to trajectories that are substantially parallel to each other.

Preferably the covering of predefined portions of the radially inner surface 113 of the liner of said at least one selected green tyre with a second substantially non-cross-linkable polysiloxane composition B is carried out in the zones situated at the beads, more preferably also at the zones situated at the sidewalls, still more preferably also at the zones situated at the edges of the tyre and/or beyond the edges at part of the crown portion of the tyre.

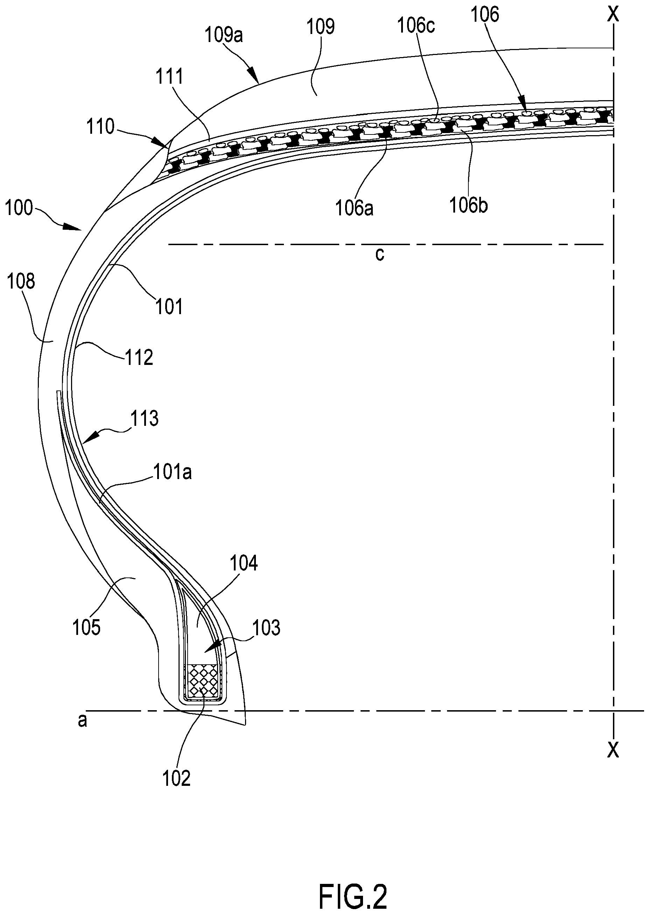

At the end of the moulding and vulcanisation process, a finished tyre is obtained like that shown in the radial half-section of figure 2.

In figure 2, "a" indicates an axial direction and "X" indicates a radial direction, in particular with X-X the line of the equatorial plane is indicated.

The tyre 100 for four-wheel vehicles comprises at least one carcass structure, comprising at least one carcass layer 101 having respectively opposite terminal flaps engaged with respective annular anchoring structures 102, termed bead cores, possibly associated with a bead filler 104. The zone of the tyre comprising the bead core 102 and the filler 104 forms a bead structure 103 intended for the anchorage of the tyre on a corresponding mounting rim, not illustrated.

The carcass structure is usually of radial type, i.e. the reinforcement elements of the at least one carcass layer 101 are found on planes comprising the rotation axis of the tyre and substantially perpendicular to the equatorial plane of the tyre. Said reinforcement elements are generally constituted by textile cords, for example rayon, nylon, polyesters (e.g. polyethylene naphthalate (PEN)). Each bead structure is associated with the carcass structure by means of bending backward the opposite lateral edges of the at least one carcass layer 101 around the annular anchoring structure 102 in a manner so as to form the so-called turn-ups of the carcass 101a as illustrated in figure 2.

In one embodiment, the coupling between the carcass structure and the bead structure can be provided by means of a second carcass layer (not represented in figure 2) applied at an axially outer position with respect to the first carcass layer. An anti-abrasive layer 105 made with elastomeric material is arranged at an external position of each bead structure 103.

The carcass structure is associated with a belt structure 106 comprising one or more belt layers 106a, 106b situated in radial superimposition with respect to each other and with respect to the carcass layer, typically having textile and/or metallic reinforcement cords incorporated within a layer of elastomeric composition.

Such reinforcement cords can have crossed orientation with respect to a circumferential extension direction of the tyre 100. By "circumferential" direction it is intended a direction generically directed according to the tyre rotation direction.

In radially more external position with respect to the belt layers 106a, 106b, at least one circumferential reinforcement layer 106c is applied, commonly known as "belt 0°", comprising at least one circumferential belt layer.

The (circumferential belt) reinforcement layer can typically comprise a plurality of textile and/or metallic reinforcement cords.

In radially outer position with respect to the belt structure 106, a tread band 109 made of elastomeric compound is applied, like other semifinished products forming the tyre 100.

Respective sidewalls 108 made of elastomeric compound are also applied in axially outer position on the lateral surfaces of the carcass structure, each extended from one of the lateral edges 110 of the tread 109 up to the respective bead structure 103. The tyre portion comprised between the edges 110 identifies the crown portion C of the tyre. The belt structure 106 is preferably extended at such crown portion C, hence up to the edges 110 in radially inner position with respect to the tread.

In radially outer position, the tread band 109 has a rolling surface 109a intended to come into contact with the ground. Circumferential grooves, which are connected by transverse notches (not represented in figure 2) in a manner so as to define a plurality of blocks of various shapes and sizes distributed on the rolling surface 109a, are generally obtained in this surface 109a, which for the sake of simplicity is represented smooth in figure 2.

An underlayer 111 can be arranged between the belt structure 106 and the tread band 109.

A layer of elastomeric material 112, generally known as "liner", provided with a radially inner layer 113, supplies the necessary impermeability to the tyre inflation air, and is typically arranged in a radially more internal position with respect to the carcass structure.

### EXAMPLES

Two expandable vulcanisation chambers 9 were treated with the substantially cross-linkable polysiloxane composition A Mono-Lube®1100 (ChemTrend Corp.) over 100% of their external surface. Such expandable chambers had a diameter of 540 mm and were obtained via injection moulding and cross-linking of butyl rubber and phenol resins with non-smooth external surface in order to improve the air leakage during the vulcanisation of the tyre.

Before covering, the chambers were cleaned of impurities and prepared for the deposition of the composition A by means of use of a hydrocarbon solvent. The covering was applied with a sponge and about 20 g of composition were applied for each covering, obtaining an average residual thickness, after the removal of the volatile phase and after cross-linking, of about 7 micrometres for each covering. After each covering, the expandable chamber was left at ambient temperature for about 30 minutes, then placed in the oven at 160°C for 1h in order to obtain the cross-linking of the polysiloxane film and cooled at ambient temperature (about 25°C), leaving it under ambient air for about 6 hours. The treatment of the expandable chamber comprising covering with substantially cross-linkable polysiloxane composition A and cross-linking of the same on the first expandable chamber (comparison chamber) was carried out once, while on the second expandable chamber (chamber according to the invention) it was carried out three successive times.

The chambers were mounted on a vulcaniser of "standing post" type, for producing tyres of 215/50 R17 size having as radially inner surface of the liner a bromobutyl formulation and a bead filler formulation rich with sulfur (1.2% sulfur in the compound).

One green tyre every six tyres was treated on the radially inner surface of the liner, at the beads and at the sidewalls and excluding the crown portion, with the substantially non-cross-linkable polysiloxane composition in aqueous solution, Mono-Lube® 8186 (ChemTrend Corp.). Before being vulcanised, the green tyre was left at ambient temperature until there was total evaporation of the water; then, normal vulcanisation of the tyres proceeded.

### NUMBER OF CYCLES

The number of vulcanisation cycles carried out by the second expandable chamber (chamber according to the invention) was greater than 326 cycles, without the chamber having to be replaced and with optimal tyre quality; from a visual examination, the tyres resulted without flaws and without non-uniformities on the radially inner surface of the liner. The number of total cycles of the comparison expandable chamber, on which only one treatment was applied, was less than 200; the use of the chamber was in fact interrupted when damage of the liner of the tyres was seen.

## Claims

1. Process for producing tyres for vehicle wheels comprising:
a) forming, on a forming drum, a green tyre (100);
b) arranging an expandable vulcanisation chamber (9);
c) shaping, moulding and vulcanising the green tyre (100),
wherein arranging an expandable vulcanisation chamber (9) comprises:
b1) covering the external surface (11) of said expandable vulcanisation chamber with a substantially cross-linkable polysiloxane composition A comprising:
A1) at least one reactive polysiloxane oil having OH groups,
A2) at least one cross-linking agent comprising at least two functional groups capable of reacting with the reactive polysiloxane oil A1), and
A6) at least one cyclic polysiloxane as a solvent
b2) cross-linking said substantially cross-linkable polysiloxane composition A on the expandable chamber;
b3) repeating at least once the aforesaid operations b1) and b2) consecutively, before starting the vulcanisation of the first green tyre.

2. Process as claimed in claim 1, wherein the operations b1) and b2) are carried out at least three times.

3. Process as claimed in claim 1 or 2, wherein after b1), said process comprises: b11) removing at least one volatile phase of said substantially cross-linkable polysiloxane composition A.

4. Process as claimed in any one of the preceding claims, wherein the substantially cross-linkable polysiloxane composition A comprises:
A3) at least one non-reactive polysiloxane oil.

5. Process as claimed in claim 4, wherein in the substantially cross-linkable polysiloxane composition A, the weight ratio between the non-reactive polysiloxane oil A3) and the reactive polysiloxane oil A1) is less than 1, preferably it is comprised between 0.01 and 0.7.

6. Process as claimed in any preceding claim, wherein the substantially cross-linkable polysiloxane composition A comprises:
A4) a cross-linking catalyst.

7. Process as claimed in any one of the preceding claims, wherein the substantially cross-linkable polysiloxane composition A comprises:
A5) at least one polysiloxane resin having condensable hydroxyl groups and siloxylic units.

8. Process as claimed in any one of the preceding claims, wherein the molecular weight of the solvent A6) is preferably less than 1000 Dalton, more preferably less than 590 Dalton.

9. Process as claimed in any one of the preceding claims, wherein the solvent A6) is selected among octamethylcyclotetrasiloxane, decamethylcyclopentasiloxane, dodecamethylcyclohexasiloxane, tetradecamethylcycloheptasiloxane, hexadecamethylcyclooctasiloxane and mixtures thereof.

10. Process as claimed in any preceding claim, wherein the substantially cross-linkable polysiloxane composition A comprises:
at least two different cross-linking agents A2) comprising at least two functional groups capable of reacting with the reactive polysiloxane oil A1).

11. Process as claimed in claim 10, wherein the different cross-linking agents A2) are preferably methyltriethoxysilane and polymethyl-hydrogen-silane.

12. Process as claimed in any one of the preceding claims, wherein the molecular weight of the reactive polysiloxane oil A1) and/or of the non-reactive polysiloxane oil A3) is greater than 590 Dalton, preferably greater than 1000 Dalton.

13. Process as claimed in any one of the preceding claims, wherein the substantially cross-linkable polysiloxane composition A is applied by means of a sponge, by spraying or spreading.

14. Process as claimed in any one of the preceding claims, wherein after each application of the substantially cross-linkable polysiloxane composition A on the external surface of the expandable chamber, the cross-linking of the substantially cross-linkable polysiloxane composition A can be carried out via heating or at ambient temperature possibly in the presence of a cross-linking catalyst.

15. Process as claimed in any one of the preceding claims, wherein the cross-linking occurs via heating at a temperature of at least 120°C, preferably at a temperature not greater than 180°C.

16. Process as claimed in any one of the preceding claims, wherein the cross-linking occurs for a time comprised between 30 minutes and 2 hours.

17. Process for treating an expandable chamber for tyre vulcanisation and moulding apparatuses comprising:
b1) covering the external surface of said expandable vulcanisation chamber with a substantially cross-linkable polysiloxane composition A comprising:
A1) at least one reactive polysiloxane oil having OH groups,
A2) at least one cross-linking agent comprising at least two functional groups capable of reacting with the reactive polysiloxane oil A1)
A6) at least one cyclic polysiloxane as a solvent
b2) cross-linking said substantially cross-linkable polysiloxane composition A on the expandable chamber;
b3) repeating at least once the aforesaid operations b1) and b2) consecutively, before starting the vulcanisation of the first green tyre.

18. Process for treating an expandable chamber for tyre vulcanisation and moulding apparatuses as claimed in claim 17, wherein for every single layer of the multilayer film of the expandable chamber, at least 10 g/m² and preferably not more than 50 g/m² of a substantially cross-linkable polysiloxane composition A are applied.

19. Process for treating an expandable chamber for tyre vulcanisation and moulding apparatuses as claimed in claim 17, wherein for every single covering of the expandable chamber, the application of said substantially cross-linkable polysiloxane composition A and/or the removal of said at least one volatile phase of said polysiloxane composition A are carried out in a manner such that after cross-linking, the remaining thickness of each single layer of the multilayer film of the expandable chamber is at least 3 micrometres, preferably less than 14 micrometres.

20. Expandable chamber for tyre vulcanisation and moulding apparatuses, having a multilayer film on the external surface comprising substantially cross-linked polysiloxane, prepared according to the process claimed in any one of claims 17 to 19.

21. Apparatus for the vulcanisation and moulding of tyres for vehicle wheels, comprising an expandable chamber as claimed in claim 20..

## Patentansprüche

1. Verfahren zur Herstellung von Reifen für Fahrzeugräder, umfassend:
a) Bilden eines Rohreifens (100) an einer Formungstrommel;
b) Anordnen einer expandierbaren Vulkanisationskammer (9);
c) Zurichten, Formen und Vulkanisieren des Rohreifens (100),
wobei das Anordnen einer expandierbaren Vulkanisationskammer (9) umfasst:
b1) Bedecken der äußeren Oberfläche (11) der expandierbaren Vulkanisationskammer mit einer im Wesentlichen vernetzbaren Polysiloxan-Zusammensetzung A, umfassend:
A1) zumindest ein reaktives Polysiloxan-Öl, das OH-Gruppen aufweist,
A2) zumindest ein Vernetzungsmittel, das zumindest zwei funktionelle Gruppen umfasst, die in der Lage sind, mit dem reaktiven Polysiloxan-Öl A1) zu reagieren, und
A6) zumindest ein zyklisches Polysiloxan als ein Lösungsmittel
b2) Vernetzen der im Wesentlichen vernetzbaren Polysiloxan-Zusammensetzung A auf der expandierbaren Kammer;
b3) Wiederholen der erwähnten Vorgänge b1) und b2) zumindest einmal der Reihe nach, bevor die Vulkanisierung des ersten Rohreifens gestartet wird.

2. Verfahren nach Anspruch 1, wobei die Vorgänge b1) und b2) zumindest dreimal ausgeführt werden.

3. Verfahren nach Anspruch 1 oder 2, wobei das Verfahren nach b1) umfasst:
b11) Entfernen zumindest einer flüchtigen Phase der im Wesentlichen vernetzbaren Polysiloxan-Zusammensetzung A.

4. Verfahren nach einem der vorhergehenden Ansprüche, wobei die im Wesentlichen vernetzbare Polysiloxan-Zusammensetzung A umfasst:
A3) zumindest ein nicht reaktives Polysiloxan-Öl.

5. Verfahren nach Anspruch 4, wobei in der im Wesentlichen vernetzbaren Polysiloxan-Zusammensetzung A das Gewichtsverhältnis zwischen dem nicht reaktiven Polysiloxan-Öl A3) und dem reaktiven Polysiloxan-Öl A1) kleiner als 1 ist, und vorzugsweise zwischen 0,01 und 0,7 liegt.

6. Verfahren nach einem der vorhergehenden Ansprüche, wobei die im Wesentlichen vernetzbare Polysiloxan-Zusammensetzung A umfasst:
A4) einen Vernetzungs-Katalysator.

7. Verfahren nach einem der vorhergehenden Ansprüche, wobei die im Wesentlichen vernetzbare Polysiloxan-Zusammensetzung A umfasst:
A5) zumindest ein Polysiloxanharz mit kondensierbaren Hydroxylgruppen und Siloxyleinheiten.

8. Verfahren nach einem der vorhergehenden Ansprüche, wobei das Molekulargewicht des Lösungsmittels A6) vorzugsweise niedriger als 1.000 Dalton, noch bevorzugter niedriger als 590 Dalton ist.

9. Verfahren nach einem der vorhergehenden Ansprüche, wobei das Lösungsmittel A6) ausgewählt ist aus Octamethylcyclotetrasiloxan, Decamethylcyclopentasiloxan, Dodecamethylcyclohexasiloxan, Tetradecamethylcycloheptasiloxan, Hexadecamethylcyclooctasiloxan und Mischungen davon.

10. Verfahren nach einem der vorhergehenden Ansprüche, wobei die im Wesentlichen vernetzbare Polysiloxan-Zusammensetzung A umfasst:
zumindest zwei verschiedene Vernetzungsmittel A2) umfassend zumindest zwei funktionelle Gruppen, die in der Lage sind, mit dem reaktiven Polysiloxan-Öl A1) zu reagieren.

11. Verfahren nach Anspruch 10, wobei die verschiedenen Vernetzungsmittel A2) vorzugsweise Methyltriethoxysilan und Polymethylwasserstoffsilan sind.

12. Verfahren nach einem der vorhergehenden Ansprüche, wobei das Molekulargewicht des reaktiven Polysiloxan-Öls A1) und/oder des nicht reaktiven Polysiloxan-Öls A3) höher als 590 Dalton, vorzugsweise höher als 1.000 Dalton ist.

13. Verfahren nach einem der vorhergehenden Ansprüche, wobei die im Wesentlichen vernetzbare Polysiloxan-Zusammensetzung A mittels eines Schwamms, durch Aufsprühen oder Aufstreichen aufgebracht wird.

14. Verfahren nach einem der vorhergehenden Ansprüche, wobei nach jedem Auftrag der im Wesentlichen vernetzbaren Polysiloxan-Zusammensetzung A auf die äußere Oberfläche der expandierbaren Kammer die Vernetzung der im Wesentlichen vernetzbaren Polysiloxan-Zusammensetzung A durch Erwärmung oder bei Umgebungstemperatur, gegebenenfalls in Anwesenheit eines Vernetzungs-Katalysators, durchgeführt werden kann.

15. Verfahren nach einem der vorhergehenden Ansprüche, wobei die Vernetzung durch Erwärmen auf eine Temperatur von zumindest 120 °C, vorzugsweise auf eine Temperatur von nicht mehr als 180 °C erfolgt.

16. Verfahren nach einem der vorhergehenden Ansprüche, wobei die Vernetzung über eine Zeit zwischen zwischen 30 Minuten und 2 Stunden erfolgt.

17. Verfahren zum Behandeln einer expandierbaren Kammer für Reifenvulkanisier- und -formvorrichtungen, umfassend:
b1) Bedecken der äußeren Oberfläche der expandierbaren Vulkanisationskammer mit einer im Wesentlichen vernetzbaren Polysiloxan-Zusammensetzung A, umfassend:
A1) zumindest ein reaktives Polysiloxan-Öl, das OH-Gruppen aufweist,
A2) zumindest ein Vernetzungsmittel, das zumindest zwei funktionelle Gruppen umfasst,
die in der Lage sind, mit dem reaktiven Polysiloxan-Öl A1) zu reagieren,
A6) zumindest ein zyklisches Polysiloxan als ein Lösungsmittel,
b2) Vernetzen der im Wesentlichen vernetzbaren Polysiloxan-Zusammensetzung A auf der expandierbaren Kammer;
b3) Wiederholen der erwähnten Vorgänge b1) und b2) zumindest einmal der Reihe nach, bevor die Vulkanisierung des ersten Rohreifens gestartet wird.

18. Verfahren zum Behandeln einer expandierbaren Kammer für Reifenvulkanisier- und -formvorrichtungen nach Anspruch 17, wobei für jede einzelne Lage des mehrlagigen Films der expandierbaren Kammer zumindest 10 g/m² und vorzugsweise nicht mehr als 50 g/m² einer im Wesentlichen vernetzbaren Polysiloxan-Zusammensetzung A aufgetragen werden.

19. Verfahren zum Behandeln einer expandierbaren Kammer für Reifenvulkanisier- und -formvorrichtungen nach Anspruch 17, wobei für jede einzelne Bedeckung der expandierbaren Kammer das Auftragen der im Wesentlichen vernetzbaren Polysiloxan-Zusammensetzung A und/oder das Entfernen der zumindest einen flüchtigen Phase der Polysiloxan-Zusammensetzung auf solche Weise durchgeführt werden, dass nach dem Vernetzen die verbleibende Dicke einer jeden einzelnen Lage des mehrlagigen Films der expandierbaren Kammer zumindest 3 Mikrometer beträgt und vorzugsweise geringer als 14 Mikrometer ist.

20. Expandierbare Kammer für Reifenvulkanisier- und -formvorrichtungen, die einen mehrlagigen Film auf der äußeren Oberfläche aufweist, der im Wesentlichen vernetzbares Polysiloxan umfasst, das gemäß dem Verfahren nach einem der Ansprüche 17 bis 19 hergestellt ist.

21. Vorrichtung für die Vulkanisierung und Formung von Reifen für Fahrzeugräder, umfassend eine expandierbare Kammer nach Anspruch 20.

## Revendications

1. Procédé de fabrication de pneus pour roues de véhicules comprenant le fait :
a) de former, sur un tambour de formation, un pneu cru (100) ;
b) d'agencer une chambre de vulcanisation expansible (9) ;
c) de mettre en forme, mouler et vulcaniser le pneu cru (100),
dans lequel l'agencement d'une chambre de vulcanisation expansible (9) comprend le fait :
b1) de recouvrir la surface externe (11) de ladite chambre de vulcanisation expansible d'une composition de polysiloxane sensiblement réticulable A comprenant :
A1) au moins une huile de polysiloxane réactive ayant des groupes OH,
A2) au moins un agent de réticulation comprenant au moins deux groupes fonctionnels capables de réagir avec l'huile de polysiloxane réactive A1), et
A6) au moins un polysiloxane cyclique en tant que solvant
b2) de réticuler ladite composition de polysiloxane sensiblement réticulable A sur la chambre expansible ;
b3) de répéter au moins une fois les opérations b1) et b2) susmentionnées consécutivement, avant de commencer la vulcanisation du premier pneu cru.

2. Procédé tel que revendiqué dans la revendication 1, dans lequel les opérations b1) et b2) sont effectuées au moins trois fois.

3. Procédé tel que revendiqué dans la revendication 1 ou 2, dans lequel après b1), ledit procédé comprend le fait :
b11) d'extraire au moins une phase volatile de ladite composition de polysiloxane sensiblement réticulable A.

4. Procédé tel que revendiqué dans l'une quelconque des revendications précédentes, dans lequel la composition de polysiloxane sensiblement réticulable A comprend :
A3) au moins une huile de polysiloxane non réactive.

5. Procédé tel que revendiqué dans la revendication 4, dans lequel dans la composition de polysiloxane sensiblement réticulable A, le rapport en poids entre l'huile de polysiloxane non réactive A3) et l'huile de polysiloxane réactive A1) est inférieur à 1, de préférence il est compris entre 0,01 et 0,7.

6. Procédé tel que revendiqué dans l'une des revendications précédentes, dans lequel la composition de polysiloxane sensiblement réticulable A comprend :
A4) un catalyseur de réticulation.

7. Procédé tel que revendiqué dans l'une quelconque des revendications précédentes, dans lequel la composition de polysiloxane sensiblement réticulable A comprend :
A5) au moins une résine polysiloxane ayant des motifs siloxyliques et des groupes hydroxyle condensables.

8. Procédé tel que revendiqué dans l'une quelconque des revendications précédentes, dans lequel le poids moléculaire du solvant A6) est de préférence inférieur à 1000 Dalton, plus préférablement inférieur à 590 Dalton.

9. Procédé tel que revendiqué dans l'une quelconque des revendications précédentes, dans lequel le solvant A6) est choisi parmi l'octaméthylcyclotétrasiloxane, le décaméthylcyclopentasiloxane, le dodécaméthylcyclohexasiloxane, le tétradécaméthylcycloheptasiloxane, l'hexadécaméthylcyclooctasiloxane et des mélanges de ceuxci.

10. Procédé tel que revendiqué dans l'une des revendications précédentes, dans lequel la composition de polysiloxane sensiblement réticulable A comprend :
au moins deux agents de réticulation différents A2) comprenant au moins deux groupes fonctionnels capables de réagir avec l'huile de polysiloxane réactive A1).

11. Procédé tel que revendiqué dans la revendication 10, dans lequel les différents agents de réticulation A2) sont de préférence le méthyltriéthoxysilane et le polyméthylhydrogénosilane.

12. Procédé tel que revendiqué dans l'une quelconque des revendications précédentes, dans lequel le poids moléculaire de l'huile de polysiloxane réactive A1) et/ou de l'huile de polysiloxane non réactive A3) est supérieur à 590 Dalton, de préférence supérieur à 1000 Dalton.

13. Procédé tel que revendiqué dans l'une quelconque des revendications précédentes, dans lequel la composition de polysiloxane sensiblement réticulable A est appliquée au moyen d'une éponge, par pulvérisation ou par étalement.

14. Procédé tel que revendiqué dans l'une quelconque des revendications précédentes, dans lequel après chaque application de la composition de polysiloxane sensiblement réticulable A sur la surface externe de la chambre expansible, la réticulation de la composition de polysiloxane sensiblement réticulable A peut être effectuée par chauffage ou à température ambiante éventuellement en présence d'un catalyseur de réticulation.

15. Procédé tel que revendiqué dans l'une quelconque des revendications précédentes, dans lequel la réticulation se produit par chauffage à une température d'au moins 120°C, de préférence à une température ne dépassant pas 180°C.

16. Procédé tel que revendiqué dans l'une quelconque des revendications précédentes, dans lequel la réticulation se produit pendant une durée comprise entre 30 minutes et 2 heures.

17. Procédé de traitement d'une chambre expansible pour appareils de vulcanisation et de moulage de pneus, comprenant le fait :
b1) de recouvrir la surface externe de ladite chambre de vulcanisation expansible d'une composition de polysiloxane sensiblement réticulable A comprenant :
A1) au moins une huile de polysiloxane réactive ayant des groupes OH,
A2) au moins un agent de réticulation comprenant au moins deux groupes fonctionnels capables de réagir avec l'huile de polysiloxane réactive A1)
A6) au moins un polysiloxane cyclique en tant que solvant
b2) de réticuler ladite composition de polysiloxane sensiblement réticulable A sur la chambre expansible ;
b3) de répéter au moins une fois les opérations b1) et b2) susmentionnées consécutivement, avant de commencer la vulcanisation du premier pneu cru.

18. Procédé de traitement d'une chambre expansible pour appareils de vulcanisation et de moulage de pneus tel que revendiqué dans la revendication 17, dans lequel pour chaque couche unique du film multicouche de la chambre expansible, au moins 10 g/m² et de préférence pas plus de 50 g/m² d'une composition de polysiloxane sensiblement réticulable A sont appliqués.

19. Procédé de traitement d'une chambre expansible pour appareils de vulcanisation et de moulage de pneus tel que revendiqué dans la revendication 17, dans lequel pour chaque revêtement unique de la chambre expansible, l'application de ladite composition de polysiloxane sensiblement réticulable A et/ou l'extraction de ladite au moins une phase volatile de ladite composition de polysiloxane A est/sont réalisée(s) de manière à ce qu'après réticulation, l'épaisseur restante de chaque couche unique du film multicouche de la chambre expansible soit d'au moins 3 micromètres, de préférence inférieure à 14 micromètres.

20. Chambre expansible pour appareils de vulcanisation et de moulage de pneus, ayant un film multicouche sur la surface externe comprenant du polysiloxane sensiblement réticulé, préparé selon le procédé revendiqué dans l'une quelconque des revendications 17 à 19.

21. Appareil pour la vulcanisation et le moulage de pneus pour roues de véhicules, comprenant une chambre expansible telle que revendiquée dans la revendication 20.
